# EUROPÄISCHE PATENTSCHRIFT

(11) **EP 3 730 022 B1**
(45) Veröffentlichungstag und Bekanntmachung des Hinweises auf die Patenterteilung: **14.04.2021**
(21) Anmeldenummer: 19171006.0
(22) Anmeldetag: 25.04.2019
(51) Int. Cl.: A47L 9/12, B01D 46/24

(54) **FILTERELEMENT**
FILTER ELEMENT
ÉLÉMENT FILTRANT

(43) Veröffentlichungstag der Anmeldung: 28.10.2020
(73) Patentinhaber: Sprintus GmbH, 73642 Welzheim-Breitenfürst (DE)
(72) Erfinder: LEPOLD, Holger, 73635 Rudersberg (DE)
(74) Vertreter: Glawe, Delfs, Moll

(56) Entgegenhaltungen:
- EP-A1- 2 952 242
- US-A1- 2017 071 426

## Beschreibung

Gegenstand der Erfindung ist ein Filterelement zum Einsetzen in einen Staubsauger. Das Filterelement umfasst eine Oberseite, eine der Oberseite gegenüberliegende Unterseite sowie einen Filterkörper, der sich von der Oberseite zu der Unterseite erstreckt und eine Bewandung eines zwischen der Ober- und Unterseite befindlichen Reinluftraums bildet. An der Oberseite ist eine in den Reinluftraum mündende Förderöffnung angeordnet, durch die ein durch den Staubsauger angetriebener Luftstrom beförderbar ist.

Ein solches Filterelement ist beispielsweise aus der DE 10 2010 004 714 A1 bekannt. Das Filterelement kann in einen Staubsauger derart eingesetzt werden, dass die Förderöffnung im Wesentlichen fluiddicht mit einem Förderanschluss des Staubsaugers verbunden wird. Über den Förderanschluss kann mit Hilfe eines üblicherweise vorhandenen Staubsaugergebläses ein Luftstrom erzeugt werden, welcher auf bekannte Weise beispielsweise ausgehend von einer Saugdüse des Staubsaugers über einen Saugschlauch in ein Gehäuse befördert werden kann. Innerhalb des Gehäuses wird der Luftstrom durch den zumindest teilweise luftdurchlässigen Filterkörper in den innenliegenden Reinluftraum des Filterelements und von dort aus über den Förderanschluss zum Gebläse geleitet.

In der Umgebung vorhandenes Sauggut kann von dem Luftstrom mitgeführt werden. Der Filterkörper ist vorzugsweise so ausgebildet, dass das Sauggut nicht durch die Bewandung des Filterkörpers hindurchtritt, sondern daran abgeschieden wird und vorzugsweise durch die Wirkung der Schwerkraft in einen Sammelbehälter fällt.

Ein Problem bei bekannten Filterelementen dieser Art ist, dass das Sauggut zumindest teilweise an der Bewandung anhaftet und so im Laufe der Zeit den Filterkörper zusetzt. Das anhaftende Sauggut wird auch als Filterkuchen bezeichnet. Der durch den Filterkörper förderbare Volumenstrom sowie die damit einhergehende Saugleistung werden durch den Filterkuchen reduziert.

Um den Filterkuchen von dem Filterkörper zu lösen, ist es aus dem Stand der Technik bekannt, den Staubsauger in einem sogenannten Spülbetrieb zu betreiben, in dem die Förderrichtung des Luftstroms durch den Filterkörper umgekehrt verläuft. Der Luftstrom wird dann ausgehend von einem Bereich außerhalb des Staubsaugers durch die Förderöffnung in den Reinluftraum hinein und anschließend nach außen durch den Filterkörper hindurch gefördert. Beim Hindurchtreten durch den Filterkörper nimmt der Luftstrom an der Außenseite des Filterkörpers anhaftendes Sauggut mit und reinigt den Filterkörper auf diese Weise. Um die Reinigungswirkung zu verbessern, kann der Luftstrom auch stoßweise über die Förderöffnung in den Luftraum befördert werden.

Nachteilig am bekannten Stand der Technik ist, dass die bereits innerhalb des Reinluftraums befindliche Luft einen unerwünschten dämpfenden Effekt auf den eintretenden Luftstrom ausübt. Der Impuls des Luftstroms wird dadurch bis zum Erreichen des Filterelements abschwächt. In dem unteren Bereich des Filterelements ist diese Dämpfungswirkung besonders ausgeprägt, so dass insbesondere der untere Bereich des Filterelements häufig nicht ausreichend von dem Filterkuchen gereinigt werden kann. Die unzureichende Reinigung führt zu einer verringerten Saugleistung.

Aus der EP 2 952 242 A1 ist eine Filteranlage zur Filterung von kontaminierten Luftstäuben bekannt, bei der eine erste Unterdruckkammer durch eine Filterplatte von einer zweiten Unterdruckkammer getrennt ist. Über eine in die Filterplatte eingesetzte Filtereinrichtung gelangt ein Luftstrom in die zweite Unterdruckkammer und wird durch eine zweite Filtereinrichtung befördert und als gereinigte Luft nach außen abgegeben. Die erste Filtereinrichtung umfasst Filterpatronen, in deren Innenraum eine sich nach oben verjüngende Kegelleiteinheit angeordnet ist. In einem Filterreinigungsbetrieb kann impulsartig entgegen der Strömungsrichtung des Luftstroms ein Reinigungsluftstrom in die erste Filtereinheit und somit in die Filterpatronen eingeleitet werden, wobei dieser Luftstrom von der Kegelleiteinheit in Richtung der Filterwandung umgeleitet wird.

Ausgehend von diesem Stand der Technik ist es die Aufgabe der vorliegenden Erfindung, ein Filterelement bereitzustellen, welches besser und gründlicher von dem Filterkuchen gereinigt werden kann. Gelöst wird diese Aufgabe durch ein Filterelement mit den Merkmalen des Anspruchs 1. Erfindungsgemäß ist in dem Reinluftraum unterhalb der Förderöffnung eine Ablenkfläche angeordnet, welche sich in Richtung der Unterseite des Filterelements erstreckt. Die Ablenkfläche ist dazu ausgebildet, einen durch die Förderöffnung eingeleiteten Luftstrom in Richtung der Bewandung des Reinluftraums abzulenken.

Indem die erfindungsgemäße Ablenkfläche einen Luftstrom in Richtung der Bewandung ablenkt, wird das Volumen, welches der Luftstrom bis zum Auftreffen auf den Filterköper durchqueren muss, deutlich reduziert. Dadurch kann der Luftstrom insbesondere im unteren Bereich des Filterelements bewusst und auf direktem Wege zum Filterkörper geleitet werden. Die in dem Reinluftraum befindliche Luft wird dadurch im Spülbetrieb insbesondere im unteren Bereich des Filterelements deutlich weniger gedämpft, bevor sie auf den Filterkörper auftrifft. Es kann dadurch sichergestellt werden, dass der Luftstrom bei der Reinigung des Filterelements mit einem deutlich größeren Impuls auf die Bewandung auftrifft.

Vorzugsweise erstreckt sich die Ablenkfläche von der Oberseite bis zu der Unterseite des Filterelements. In diesem Fall tritt der erfindungsgemäße Ablenkungseffekt über die gesamte Höhe des Filterelements zutage, was die Reinigungseffektivität erhöht.

Gemäß der Erfindung bildet die Ablenkfläche eine untere Begrenzung des Reinluftraums. Insbesondere kann die Ablenkfläche eine im Wesentlichen fluiddichte untere Begrenzung des Reinluftraums bilden. In diesem Fall wird sichergestellt, dass der Luftstrom im Spülbetrieb nicht nach unten an der Ablenkfläche vorbeitreten kann, sondern vollständig von der Ablenkfläche in Richtung Bewandung abgelenkt wird. Durch die Ablenkfläche wird auf effektive Weise das Volumen des Reinluftraums reduziert, so dass ein zur Reinigung durch die Förderöffnung eingebrachter Luftstrom unmittelbar in Richtung des Filterkörpers abgelenkt wird.

Im Rahmen der Erfindung wurde erkannt, dass sich der auf die Reinigung nachteilig auswirkende Einfluss der Luftverdichtung während der Bewegung des Luftstroms von oben nach unten durch das Filterelement zunimmt. Insbesondere ein unterer Bereich des Filterkörpers, welcher von der Förderöffnung weiter entfernt ist, wird daher schlechter gereinigt als ein oberer Bereich, welcher sich in der Näher der Förderöffnung befindet. Die Ablenkfläche kann daher vorzugsweise einen Abstand zu der Bewandung des Reinluftraums aufweisen, welcher im Bereich eines oberen Abschnittes der Ablenkfläche größer ist als im Bereich eines unteren Abschnittes der Ablenkfläche. Durch den in dem unteren Bereich geringeren Abstand kann sichergestellt werden, dass der Luftstrom dort einen für die Ablösung des Filterkuchens ausreichend großen Impuls beibehält. In einer bevorzugten Ausführungsform kann der Abstand von der Oberseite zu der Unterseite hin abnehmen. Insbesondere ist es von Vorteil, wenn der Abstand von der Oberseite zu der Unterseite hin kontinuierlich abnimmt. Der Abstand bezeichnet dabei die Entfernung eines auf einer bestimmten Höhe des Filterelements befindlichen Abschnitts der Ablenkfläche zu der Seite der Bewandung des Reinluftraums, welche diesem Abschnitt zugewandt ist, also vom abgelenkten Luftstrom getroffen wird. Der Abstand wird dabei in horizontaler Richtung gemessen. Wenn auf einer bestimmten Höhe verschiedene Abschnitte der Ablenkfläche verschiedene Abstände zu der Bewandung aufweisen, kann der Abstand durch einen mittleren Abstand dieser verschiedenen Abschnitte zur Bewandung gebildet sein.

Die Ablenkfläche kann grundsätzlich eine beliebige Form haben. Beispielsweise kann die Ablenkfläche eine gewölbte Form aufweisen oder als Planfläche ausgebildet sein.

Die Ablenkfläche kann in einer Ausführungsform mit einer vertikalen Achse des Filterelements einen Winkel einschließen, welcher zwischen 20° und 70°, vorzugsweise zwischen 30° und 60°, und weiter vorzugsweise zwischen 40° und 50° liegt. Die vertikale Achse verläuft von der Oberseite zu der Unterseite. Im Spülbetrieb wird der Luftstrom üblicherweise entlang der vertikalen Achse in den Reinluftraum eingeleitet. Die genannten Winkelbereiche stellen eine effektive Ablenkung des Luftstroms sicher.

In einer bevorzugten Ausführungsform ist die Ablenkfläche dazu ausgebildet, den Reinluftraum in eine Mehrzahl voneinander getrennter Teilräume zu unterteilen. Insbesondere kann die Ablenkfläche dazu ausgebildet sein, den Reinluftraum in zwei voneinander getrennte Teilräume zu unterteilen. Die Teilräume sind vorzugsweise im Wesentlichen fluiddicht voneinander getrennt, so dass zwischen den voneinander getrennten Teilräumen vorzugsweise kein direkter Luftaustausch stattfinden kann. Durch die Unterteilung des Reinluftraums wird das Volumen des Reinluftraums auf effektive Weise reduziert und so die Reinigungswirkung verbessert.

Vorzugsweise ist die Bewandung des Reinluftraums im Wesentlichen zylinderförmig ausgebildet. Weiterhin kann das Filterelement einen Stützrahmen zum Halten des Filterkörpers aufweisen, wobei die Ablenkfläche mit dem Stützrahmen verbunden sein kann. Der Stützrahmen kann ein die Oberseite bildendes Deckenelement, in dem die Förderöffnung angeordnet ist, und ein die Unterseite bildendes Bodenelement aufweisen, wobei das Deckenelement und das Bodenelement vorzugsweise durch ein Wandelement miteinander verbunden sind. In einer bevorzugten Ausführungsform ist die Ablenkfläche an ihrem oberen Ende mit dem Deckenelement verbunden. An ihrem unteren Ende kann die Ablenkfläche mit dem Wandelement und/oder mit dem Bodenelement verbunden sein. Durch die genannten Merkmale kann ein besonders stabiles Filterelement gebildet werden.

Gegenstand der Erfindung ist auch ein Staubsauger, in den ein erfindungsgemäßes Filterelement eingesetzt ist. In einer bevorzugten Ausführungsform, in der die Ablenkfläche dazu ausgebildet ist, den Reinluftraum in eine Mehrzahl und vorzugsweise in zwei voneinander im wesentlichen fluiddicht getrennte Teilräume zu unterteilen, weist der Staubsauger zumindest zwei unabhängig voneinander in einen Saugbetrieb bzw. in einen Spülbetrieb schaltbare Förderkanäle auf. Bevorzugt ist der erste Förderkanal mit einem ersten der Teilräume und der zweite Förderkanal mit einem anderen der Teilräume verbunden ist. Durch diese Ausgestaltung kann über den ersten Teilraum beispielsweise ein Spülbetrieb und gleichzeitig über den anderen Teilraum ein Saugbetrieb durchgeführt werden.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigen:
- Figur 1:: eine Seitenansicht eines erfindungsgemäßen Filterelements;
- Figur 2:: eine vertikale Schnittansicht entlang der in Figur 1 gezeigten Linie B-B;
- Figur 3:: eine Draufsicht auf das Filterelement der Figur 1;
- Figur 4:: eine seitliche Schnittansicht eines erfindungsgemäßen Staubsaugers, in den ein erfindungsgemäßes Filterelement eingesetzt ist;
- Figur 5:: eine dreidimensionale teilweise geschnittene Ansicht des Staubsaugers der Figur 4, wobei nur eine Teil des Staubsaugers gezeigt ist.

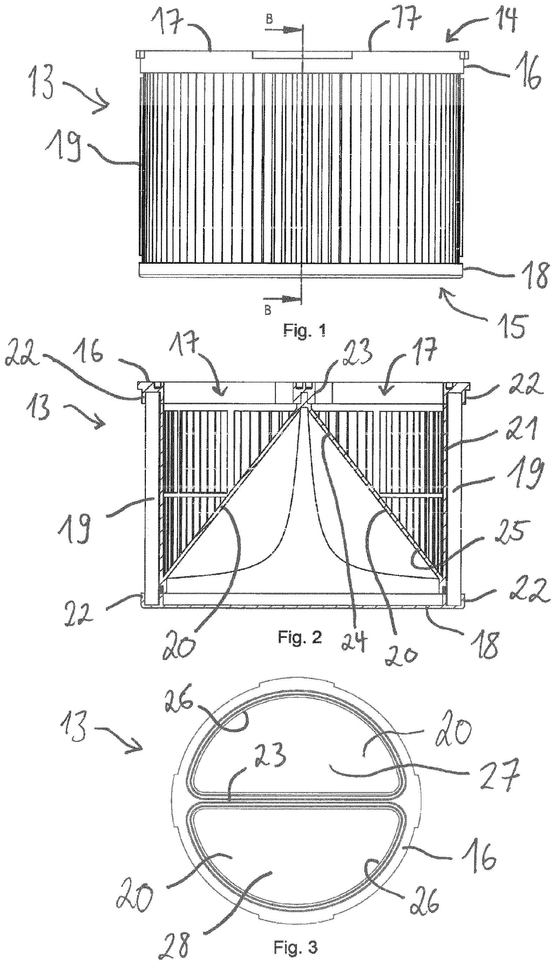

Figur 1 zeigt eine Seitenansicht eines erfindungsgemäßen Filterelements 13. Das Filterelement 13 weist eine Oberseite 14 sowie eine Unterseite 15 auf. An der Oberseite 14 befindet sich ein Deckenelement 16, in dem eine Förderöffnung 17 angeordnet ist. An der Unterseite 15 befindet sich ein Bodenelement 18. Das Filterelement 13 weist außerdem einen Filterkörper 19 auf, welcher das Bodenelement 18 mit dem Deckenelement 16 verbindet. Durch das Bodenelement 18, dass Deckenelement 16 und den Filterkörper 19 wird ein in einem Inneren des Filterelements 13 befindlicher Reinluftraum eingeschlossen. Die Förderöffnung 17 mündet in den Reinluftraum. Das Filterelement 19 bildet eine Bewandung 26 des Reinluftraums (siehe Figur 3), welche zumindest teilweise luftdurchlässig ist.

An die Förderöffnung 17 kann ein in den Figuren nicht gezeigter Förderanschluss eines Staubsaugers angeschlossen werden, um einen Luftstrom durch die Förderöffnung 17 zu befördern. Im Saugbetrieb des Staubsaugers wird der Luftstrom von außen durch den zumindest teilweise luftdurchlässigen Filterkörper 19 hindurch in den Reinluftraum geleitet. Von dem Luftstrom mitgeführtes Sauggut wird dabei außen an der Bewandung 26 des Filterkörpers 19 abgeschieden, wodurch die Luft gereinigt wird. Die gereinigte Luft tritt dann durch die Förderöffnung 17 nach oben aus dem Reinluftraum heraus.

Im Laufe der Zeit sammelt sich an der Außenseite der Bewandung 26 anhaftendes Sauggut, welches auch als Filterkuchen bezeichnet wird. Der Filterkuchen verringert die Saugleistung und muss daher regelmäßig von der Außenseite der Bewandung 26 entfernt werden. Dazu kann der Staubsauger in einen Spülbetrieb versetzt werden, in dem der Luftstrom in umgekehrter Richtung von oben durch die Förderöffnung in den Reinluftraum strömt.

Figur 2 zeigt eine Schnittansicht entlang der in Figur 1 gezeigten Linie B-B. Neben den in der Schnittebene liegenden Schnittkanten sind in der Ansicht zudem auch Konturen des Filterkörpers 19 gezeigt, welche außerhalb der Schnittebene liegen. Figur 3 zeigt eine Draufsicht auf das erfindungsgemäße Filterelement der Figuren 1 und 2.

In Figur 2 ist zu sehen, dass das Filterelement 13 einen Stützrahmen aufweist, welcher das Bodenelement 18, das Deckenelement 16, ein Wandelement 21, einen Balkenelement 23 sowie zwei erfindungsgemäße Ablenkflächen 20 umfasst. Im vorliegenden Ausführungsbeispiel ist der Stützrahmen einstückig ausgebildet, wobei ein Fachmann leicht erkennen kann, dass auch eine mehrteilige Ausbildung des Stützrahmens im Rahmen der Erfindung realisiert werden kann.

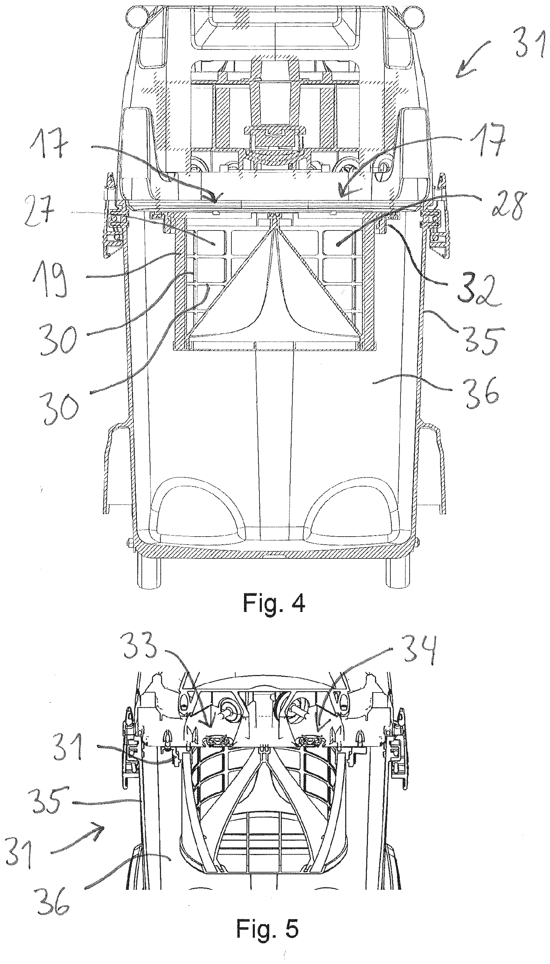

Sowohl an dem Bodenelement 18 als auch an dem Deckenelement 16 ist jeweils ein Haltevorsprung 22 angeordnet. Zwischen den Haltevorsprüngen 22 und der Außenseite des Wandelements 21 ist der Filterkörper 19 eingesetzt. Das Wandelement 21 weist einen aus einer Mehrzahl von Stegen 30 gebildeten Gitterahmen auf (in den Figuren 1 bis 3 nicht erkennbar, jedoch in den Figuren 4 und 5 gezeigt), welcher ein Durchleiten des Luftstroms durch den Filterkörper 19 ermöglicht. An der Oberseite des Deckenelements 16 befindet sich eine aus zwei Teilöffnungen 17 gebildete Förderöffnung.

Die erfindungsgemäßen Ablenkflächen 20 sind unterhalb der Förderöffnungen 17 angeordnet und jeweils zur Ablenkung eines durch die Förderöffnungen 17 in vertikaler Richtung von oben in den Reinluftraum eingeleiteten Luftstroms ausgebildet. Ein oberes Ende 24 der Ablenkflächen 20 ist jeweils an dem Balkenelement 23 befestigt. Das Balkenelement 23 verläuft zentral über den Querschnitt des Filterelements 13 und ist beidseitig mit dem Deckenelement 16 verbunden (siehe Figur 3). Das Balkenelement 23 dient in Zusammenwirken mit den Ablenkflächen 20 zur Trennung des Reinluftraums in zwei Teilräume sowie zur Abdichtung des oberen Bereichs der Teilräume. Ein unteres Ende 25 der Ablenkflächen 20 ist mit einem unteren Ende der Wandflächen 21 verbunden.

Die Ablenkflächen 20 unterteilen den innerhalb des Filterkörpers gebildeten Reinluftraum in zwei im wesentlichen fluiddicht getrennte Teilräume 27, 28. "Fluiddicht getrennt" bedeutet hier, dass zumindest kein unmittelbarer Luftaustausch zwischen den Teilräumen 27, 28 stattfinden kann. In der Draufsicht der Figur 3 ist erkennbar, dass die beiden Teilräume 27, 28 eine im wesentlichen halbkreisförmige Gestalt haben. Zusammen bilden die beiden Teilräume 27, 28 eine im Wesentlichen zylinderförmige Bewandung 26 aus. Die Ablenkflächen 20 begrenzen dabei den jeweiligen Teilraum 27, 28 nach unten hin, so dass ein von oben über die Förderöffnung 17 in die Teilräume 27, 28 eintretender Luftstrom nicht an den Ablenkflächen 20 nach unten hin vorbeitreten kann, sondern in Richtung der Bewandung 26 des jeweiligen Teilraums 27, 28 abgelenkt wird.

Der Abstand der Ablenkflächen 20 zu dem Teil der Bewandung 26, der der jeweiligen Ablenkfläche 20 zugewandt ist, nimmt von dem oberen Bereich des Filterelements 13 zum unteren Bereich des Filterelements 13 hin kontinuierlich ab (siehe Figur 2). Insbesondere sind die unteren Abschnitte 25 der Ablenkflächen 20 in der Nähe des jeweiligen Teils der Bewandung 26 angeordnet. Auf diese Weise kann auch im Bereich der Unterseite 15 des Filterelements 13 eine effektive Ablösung des Filterkuchens sichergestellt werden.

Figur 4 zeigt eine seitliche Schnittansicht eines erfindungsgemäßen Staubsaugers, in den ein erfindungsgemäßes Filterelement eingesetzt ist. Figur 5 zeigt einen Ausschnitt aus der Figur 4 in einer dreidimensionalen teilweise geschnittenen Seitenansicht. In den Ansichten der Figuren 4 und 5 sind die Stege 30 erkennbar, welche zusammen das Wandelement 21 des Stützrahmens bilden.

Der Staubsauger 31 umfasst ein Gehäuse 35, welches einen Innenraum 36 bildet. Im Innenraum 36 befinden sich Klemmbacken 32, welche mit dem Deckenelement 16 zusammenwirken, um das Filterelement 13 innerhalb des Innenraums 36 festzuklemmen. Der Staubsauger umfasst zudem ein in den Figuren nicht gezeigtes Fördergebläse, welches zur Erzeugung eines Luftstroms dient.

In den Innenraum 36 mündet ein in den Figuren nicht erkennbarer Saugeingang, über den im Saugbetrieb der Luftstrom zur Einleitung von Schmutzstoffen in den Innenraum 36 gefördert wird. Im Saugbetrieb tritt der Luftstrom anschließend durch den Filterkörper 19 in den Reinluftraum ein. Dabei werden die Schmutzstoffe außen am Filterkörper 19 abgeschieden, wobei ein Teil der Schmutzstoffe unter der Wirkung der Schwerkraft herunterfällt und im Innenraum 36 gesammelt wird und ein anderer Teil der Schmutzstoffe an der Außenwand des Filterkörpers 19 haften bleibt und so einen Filterkuchen bildet. Vom Reinluftraum gelangt der Luftstrom über die Förderöffnungen 17 zurück in die Umgebung des Staubsaugers.

Zum Lösen des Filterkuchens kann die Richtung des Luftstroms wie oben bereits beschrieben umgekehrt werden, wobei in diesem Fall durch die oben erläuterten vorteilhaften Wirkungen der Ablenkflächen 20 eine besonders effektive Reinigung des Filterkörpers stattfindet.

Weitere Vorteile können dadurch erzielt werden, dass der Staubsauger wie vorliegend zwei voneinander unabhängig in einen Saugbetrieb bzw. in einen Spülbetrieb schaltbare Förderkanäle 33, 34 aufweist, wobei der Förderkanal 33 in die Förderöffnung 17 des Teilraums 27 und der Förderkanal 34 in die Förderöffnung 17 des Teilraums 28 mündet. Es besteht eine im Wesentlichen fluiddichte Verbindung vom jeweiligen Teilraum 27, 28 zum jeweiligen Förderkanal 33, 34, so dass beispielsweise der Förderkanal 33 im Saugbetrieb betrieben werden kann, um über den Teilraum 27 einen Saugluftstrom zu fördern. Gleichzeitig kann der Förderkanal 34 im Spülbetrieb betrieben werden, um über den Teilraum 28 einen Spülluftstrom zu fördern. Indem die Ablenkflächen 20, wie oben erläutert, die Teilräume 27, 28 im wesentlichen fluiddicht voneinander trennen, kann in diesem Fall die dem Teilraum 28 zugeordnete Hälfte des Filterelements 13 gereinigt werden, während über die dem Teilraum 27 zugeordnete andere Hälfte des Filterelements 13 noch immer ein Saugbetrieb möglich ist. Durch die unabhängige Schaltbarkeit kann die Funktion der Förderkanäle 33, 34 anschließend vertauscht werden, so dass über den Förderkanal 33 ein Spülbetrieb und über den Förderkanal 34 ein Saugbetrieb erfolgen kann.

## Patentansprüche

1. Filterelement (13) zum Einsetzen in einen Staubsauger, mit einer Oberseite (14), einer der Oberseite (14) gegenüberliegenden Unterseite (15), einem Filterkörper (19), der sich von der Oberseite (14) zu der Unterseite (15) erstreckt und der eine Bewandung (26) eines zwischen der Ober- und der Unterseite befindlichen Reinluftraums (27, 28) bildet, und mit einer an der Oberseite (14) angeordneten und in den Reinluftraum (27, 28) mündenden Förderöffnung (17), durch die ein durch den Staubsauger angetriebener Luftstrom beförderbar ist, wobei in dem Reinluftraum (27, 28) unterhalb der Förderöffnung (17) eine sich in Richtung der Unterseite (15) erstreckende Ablenkfläche (20) angeordnet ist, die dazu ausgebildet ist, einen durch die Förderöffnung (17) eingeleiteten Luftstrom in Richtung der Bewandung (26) des Reinluftraums (27, 28) abzulenken, **dadurch gekennzeichnet, dass** die Ablenkfläche (20) eine untere Begrenzung des Reinluftraums (27, 28) bildet.

2. Filterelement (13) gemäß Anspruch 1, bei dem sich die Ablenkfläche (20) im Wesentlichen von der Oberseite (14) bis im Wesentlichen zu der Unterseite (15) erstreckt.

3. Filterelement (13) gemäß einem Anspruch 1 oder 2, bei dem die Ablenkfläche (20) die Größe des Reinluftraums (27, 28) um mehr als 15%, vorzugsweise mehr als 25%, weiter vorzugsweise um mehr als 35% reduziert.

4. Filterelement (13) gemäß einem der Ansprüche 1 bis 3, bei dem die Ablenkfläche (20) einen Abstand zu der Bewandung (26) des Reinluftraums (27, 28) aufweist, der im Bereich eines oberen Abschnittes (24) der Ablenkfläche (20) größer ist als im Bereich eines unteren Abschnittes (25) der Ablenkfläche (20).

5. Filterelement (13) gemäß Anspruch 4, bei dem der Abstand der Ablenkfläche (20) zu der Bewandung (26) des Reinluftraums (27, 28) von der Oberseite (14) zu der Unterseite (15) hin vorzugsweise kontinuierlich abnimmt.

6. Filterelement (13) gemäß einem der Ansprüche 1 bis 5, bei dem die Ablenkfläche (20) mit einer vertikalen Achse des Filterelements (13) einen Winkel einschließt, der zwischen 20° und 70°, vorzugsweise zwischen 30° und 60°, weiter vorzugsweise zwischen 40° und 50° liegt.

7. Filterelement (13) gemäß einem der Ansprüche 1 bis 6, bei dem die Ablenkfläche (20) dazu ausgebildet ist, den Reinluftraum (27, 28) in eine Mehrzahl von Teilräumen (27, 28) und vorzugsweise in zwei voneinander getrennter Teilräume (27, 28) zu unterteilen, wobei die Teilräume (27, 28) weiter vorzugsweise voneinander fluiddicht getrennt sind.

8. Filterelement (13) gemäß einem der Ansprüche 1 bis 7, bei dem die Bewandung (26) des Reinluftraums (27, 28) im Wesentlichen zylinderförmig ausgebildet ist.

9. Filterelement (13) gemäß einem der Ansprüche 1 bis 8, welches einen Stützrahmen zum Halten des Filterkörpers (19) aufweist, wobei die Ablenkfläche (20) mit dem Stützrahmen verbunden ist.

10. Filterelement (13) gemäß Anspruch 9, bei dem der Stützrahmen ein die Oberseite bildendes Deckenelement (16), in dem die Förderöffnung (17) angeordnet ist, und ein die Unterseite (15) bildendes Bodenelement (18) aufweist, wobei das Deckenelement (16) und das Bodenelement (18) vorzugsweise durch ein Wandelement (21) miteinander verbunden sind.

11. Filterelement (13) gemäß Anspruch 10, bei dem die Ablenkfläche (20) an ihrem oberen Ende mit dem Deckenelement (16) verbunden ist.

12. Filterelement (13) gemäß Anspruch 10 oder 11, bei dem die Ablenkfläche (20) an ihrem unteren Ende mit dem Wandelement (21) und/oder mit dem Bodenelement (18) verbunden ist.

13. Staubsauger, in den ein Filterelement gemäß einem der Ansprüche 1 bis 12 eingesetzt ist.

14. Staubsauger gemäß Anspruch 13, wobei die Ablenkfläche (20) dazu ausgebildet ist, den Reinluftraum (27, 28) in eine Mehrzahl und vorzugsweise in zwei voneinander im wesentlichen fluiddicht getrennte Teilräume (27, 28) zu unterteilen, wobei der Staubsauger zumindest zwei unabhängig voneinander in einen Saugbetrieb bzw. in einen Spülbetrieb schaltbare Förderkanäle (33, 34) aufweist, wobei der erste Förderkanal (33) mit einem ersten der Teilräume (27) und der zweite Förderkanal (34) mit einem anderen der Teilräume (28) verbunden ist.

## Claims

1. A filter element (13) for insertion into a vacuum cleaner, with an upper side (14), a lower side (15) which lies opposite the upper side (14), a filter body (19) which extends from the upper side (14) to the lower side (15) and which forms a wall (26) of a clean air space (27, 28) which is situated between the upper side and the lower side, and with a conveying opening (17) which is arranged on the upper side (14), opens into the clean air space (27, 28), and through which an air flow which is driven by way of the vacuum cleaner can be conveyed, wherein a deflecting surface (20) extending in the direction of the lower side (15) is arranged in the clean air space (27, 28) below the conveying opening (17), the deflecting surface (20) being configured to deflect an air flow which is introduced through the conveying opening (17) in the direction of the wall (26) of the clean air space (27, 28)
**characterized in that** the deflecting surface (20) forms a lower boundary of the clean air space (27, 28).

2. The filter element (13) as claimed in claim 1, wherein the deflecting surface (20) extends substantially from the upper side (14) as far as substantially the lower side (15).

3. The filter element (13) as claimed in one of claim 1 or 2, wherein the deflecting surface (20) reduces the size of the clean air space (27, 28) by more than 15%, preferably more than 25%, further preferably by more than 35%.

4. The filter element (13) as claimed in any one of claims 1 to 3, wherein the deflecting surface (20) is at a spacing from the wall (26) of the clean air space (27, 28), which spacing is greater in the region of an upper section (24) of the deflecting surface (20) than in the region of a lower section (25) of the deflecting surface (20).

5. The filter element (13) as claimed in claim 4, wherein the spacing of the deflecting surface (20) from the wall (26) of the clean air space (27, 28) decreases preferably continuously from the upper side (14) as far as the lower side (15) .

6. The filter element (13) as claimed in any one of claims 1 to 5, wherein the deflecting surface (20) encloses an angle with a vertical axis of the filter element (13), which angle lies between 20° and 70°, preferably between 30° and 60°, further preferably between 40° and 50°.

7. The filter element (13) as claimed in any one of claims 1 to 6, wherein the deflecting surface (20) is configured to divide the clean air space (27, 28) into a plurality of subspaces (27, 28) and preferably into two subspaces (27, 28) which are separated from one another, the subspaces (27, 28) further preferably being separated from one another in a fluid-tight manner.

8. The filter element (13) as claimed in any one of claims 1 to 7, wherein the wall (26) of the clean air space (27, 28) is of substantially cylindrical configuration.

9. The filter element (13) as claimed in any one of claims 1 to 8, which has a supporting frame for holding the filter body (19), with the deflecting surface (20) being connected to the supporting frame.

10. The filter element (13) as claimed in claim 9, wherein the supporting frame has a top element (16) which forms the upper side and in which the conveying opening (17) is arranged, and a bottom element (18) which forms the lower side (15), the top element (16) and the bottom element (18) preferably being connected to one another by way of a wall element (21).

11. The filter element (13) as claimed in claim 10, wherein the deflecting surface (20) is connected at its upper end to the top element (16).

12. The filter element (13) as claimed in claim 10 or 11, in the case of which the deflecting surface (20) is connected at its lower end to the wall element (21) and/or to the bottom element (18).

13. A vacuum cleaner, into which a filter element as claimed in any one of claims 1 to 12 is inserted.

14. The vacuum cleaner as claimed in claim 13, wherein the deflecting surface (20) is configured to divide the clean air space (27, 28) into a plurality of and preferably into two subspaces (27, 28) which are separated from one another in a substantially fluid-tight manner, the vacuum cleaner having at least two conveying ducts (33, 34) which can be switched independently of one another into suction operation or into flushing operation, the first conveying duct (33) being connected to a first one of the subspaces (27), and the second conveying duct (34) being connected to another one of the subspaces (28).

## Revendications

1. Elément filtrant (13) destiné à être inséré dans un aspirateur, comprenant une face supérieure (14), une face inférieure (15) opposée à la face supérieure (14), un corps de filtre (19) qui s'étend de la face supérieure (14) à la face inférieure (15) et qui forme une paroi (26) d'un espace d'air pur (27, 28) situé entre la face supérieure et la face inférieure, et une ouverture de transport (17) qui est disposée sur la face supérieure (14) et qui débouche dans l'espace d'air pur (27, 28) et à travers laquelle peut être transporté un flux d'air entraîné par l'aspirateur, une surface de déflexion (20) étant disposée dans l'espace d'air pur (27, 28) en dessous de l'ouverture de transport (17) et s'étendant en direction de la face inférieure (15), surface qui est réalisée pour défléchir un flux d'air, introduit à travers l'ouverture de transport (17), en direction de la paroi (26) de l'espace d'air pur (27, 28), **caractérisé en ce que** la surface de déflexion (20) constitue une délimitation inférieure de l'espace d'air pur (27, 28).

2. Élément filtrant (13) selon la revendication 1, dans lequel la surface de déflexion (20) s'étend sensiblement depuis la face supérieure (14) sensiblement jusqu'à la face inférieure (15).

3. Élément filtrant (13) selon la revendication 1 ou 2, dans lequel la surface de déflexion (20) réduit la taille de l'espace d'air pur (27, 28) de plus de 15 %, de préférence de plus de 25 %, de préférence de plus de 35 %.

4. Élément filtrant (13) selon l'une des revendications 1 à 3, dans lequel la surface de déflexion (20) présente une distance par rapport à la paroi (26) de l'espace d'air pur (27, 28) qui est plus grande au niveau d'une portion supérieure (24) de la surface de déflexion (20) qu'au niveau d'une portion inférieure (25) de la surface de déflexion (20).

5. Élément filtrant (13) selon la revendication 4, dans lequel la distance de la surface de déflexion (20) par rapport à la paroi (26) de l'espace d'air pur (27, 28) diminue de préférence de manière continue depuis la face supérieure (14) vers la face inférieure (15).

6. Élément filtrant (13) selon l'une des revendications 1 à 5, dans lequel la surface de déflexion (20) forme un angle avec un axe vertical de l'élément filtrant (13), qui est compris entre 20° et 70°, de préférence entre 30° et 60°, de manière particulièrement préférée entre 40° et 50°.

7. Élément filtrant (13) selon l'une des revendications 1 à 6, dans lequel la surface de déflexion (20) est réalisée pour diviser l'espace d'air pur (27, 28) en une pluralité d'espaces partiels (27, 28) et de préférence en deux espaces partiels (27, 28) séparés l'un de l'autre, les espaces partiels (27, 28) étant en outre de préférence séparés l'un de l'autre de manière étanche aux fluides.

8. Élément filtrant (13) selon l'une des revendications 1 à 7, dans lequel la paroi (26) de l'espace d'air pur (27, 28) est de forme sensiblement cylindrique.

9. Élément filtrant (13) selon l'une des revendications 1 à 8, comprenant un cadre de support pour maintenir le corps de filtre (19), la surface de déflexion (20) étant reliée au cadre de support.

10. Élément filtrant (13) selon la revendication 9, dans lequel le cadre de support comprend un élément de plafond (16) qui forme la face supérieure et dans lequel est disposée l'ouverture de transport (17), et un élément de fond (18) qui forme la face inférieure (15), l'élément de plafond (16) et l'élément de fond (18) étant de préférence reliés entre eux par un élément de paroi (21).

11. Élément filtrant (13) selon la revendication 10, dans lequel la surface de déflexion (20) est reliée à son extrémité supérieure à l'élément de plafond (16).

12. Élément filtrant (13) selon la revendication 10 ou 11, dans lequel la surface de déflexion (20) est reliée à son extrémité inférieure audit élément de paroi (21) et/ou audit élément de fond (18).

13. Aspirateur dans lequel est inséré un élément filtrant selon l'une des revendications 1 à 12.

14. Aspirateur selon la revendication 13, dans lequel la surface de déflexion (20) est réalisée pour diviser l'espace d'air pur (27, 28) en une pluralité et de préférence en deux espaces partiels (27, 28) qui sont séparés l'un de l'autre de manière sensiblement étanche aux fluides, l'aspirateur présentant au moins deux canaux de transport (33, 34) qui peuvent être commutés indépendamment l'un de l'autre dans un mode d'aspiration ou dans un mode de rinçage, le premier canal de transport (33) étant relié à un premier des espaces partiels (27) et le second canal de transport (34) étant relié à un autre des espaces partiels (28).
